Europäisches Patentamt

European Patent Office

Office européen des brevets

(19)

(11) Numéro de publication : **0 516 531 A1**

## (12) DEMANDE DE BREVET EUROPEEN

(21) Numéro de dépôt : **92401442.6**

(22) Date de dépôt : **26.05.92**

(51) Int. Cl.⁵ : **G06F 15/40**

(30) Priorité : **30.05.91 FR 9106532**

(43) Date de publication de la demande :
**02.12.92 Bulletin 92/49**

(84) Etats contractants désignés :
**AT BE CH DE ES GB GR IT LI LU NL PT SE**

(71) Demandeur : **AEROSPATIALE Société
Nationale Industrielle
37, Boulevard de Montmorency
F-75781 Paris Cédex 16 (FR)**

(72) Inventeur : **Soubrier, Gilles
11 rue Saint Pierre
F-78100 St-Germain-en-Laye (FR)**

(74) Mandataire : **Mongrédien, André et al
c/o SOCIETE DE PROTECTION DES
INVENTIONS 25, rue de Ponthieu
F-75008 Paris (FR)**

(54) **Procédé de traitement de données pour système d'échange de données notamment pour système de télémesure ou de télécommande.**

(57)    L'invention concerne un procédé de traitement de données pour système d'échange de données par multiplex numérique sous forme d'informations synchrones et/ou asynchrones, constituées de messages numériques dans un format donné, le système comprenant une unité de traitement comportant une mémoire principale, des moyens d'affichage sur un écran et des moyens d'édition.

Le procédé consiste à :

— enregistrer dans la mémoire principale des moyens de traitement, une table dans laquelle toute donnée, quel que soit son format d'origine, est décrite de façon arborescente sous forme d'un champ d'éléments binaires (de bits) qui est le fils d'un champ d'éléments binaires père, le père pouvant lui-même être le fils d'un autre champ père si ledit champ père n'est pas le plus haut dans la hiérarchie de l'arbre,

— éditer la table de données à partir des moyens d'édition.

Application aux systèmes d'échange de données tels que les systèmes de télémesure ou de télécommande.

EP 0 516 531 A1

L'invention concerne un procédé de traitement de données pour système d'échange de données sur un bras ou sur un canal d'information.

Le procédé s'applique notamment aux systèmes de télémesure dans lesquels des mesures sont effectuées à bord d'engins aérospatiaux et transmises au sol par multiplex numérique sous forme d'informations synchrones et/ou asynchrones constituées de messages numériques selon des formats donnés, étant entendu que l'on qualifie de format la description d'assemblage des données.

Le procédé s'applique également aux systèmes de télécommande.

Le problème posé est complexe. Il provient d'une part du fait que dans un système d'échange de données il y a des unités qui créent les formats et que ces unités présentent de grandes diverstiés entre elles. Le problème provient d'autre part du fait qu'il y a des unités qui utilisent ces formats et qu'il y a également une diversité entre ces unités utilisatrices.

Concernant les unités de traitement créant les formats, on se heurte au fait qu'actuellement la forme de description des formats créés est spécifique à la programmation de chaque type d'unité.

De plus l'intégration des contraintes spécifiques des unités créant les formats conduit souvent à la création d'un programme informatique de démultiplexage/décommutation spécifique de l'unité.

Concernant les unités de traitement utilisatrices de ces formats, on se heurte au fait que leur nature est différente puisqu'il s'agit de centres de contrôle des chaînes de mesure, de centres de dépouillement qui restituent les mesures auprès des exploitants à partir des données reçues, de centres d'acquisition qui réalisent la réception des télémesures et la restitution en temps réel de certaines mesures :

- les matériels permettant de lire les différents formats employés (il s'agit de décommutateurs/démultiplexeurs) sont multiples et ont des caractéristiques diverses, en particulier la programmation des appareils est spécifique à chacun,
- les informations à décrire ont des normes ou des recommandations variées. On citera par exemple les normes ou recommandations IRIG, CCSDS et CE83.

De plus, certaines données sont rassemblées sous des formats qui ne font l'objet ni de normes, ni de recommandations (il s'agit par exemple de formats d'espionnage de données internes à un engin transmis au sol par la télémesure).

D'autre part les normes ou recommandations des formats donnent une description de ces formats, mais pas d'indication quant à la forme de description des formats en question. En particulier, il n'existe pas de recommandation de description informatique des formats qui soit commune à tous les formats.

Actuellement, les formats utilisés sont transmis sous une forme papier non standardisée à tous les utilisateurs qui interprètent ce format et programment leurs machines.

Les formats particuliers, comme les espionnages de bus, font l'objet de description papier souvent multiples et conduisent à la création d'un lecteur de format spécifique de l'unité qui a créé ce format (en général il s'agit d'un programme informatique).

Ainsi dans le cas de télémesure, les données qui sont les paramètres mesure sont traitées et assemblées pour former un message qui passe généralement sur un canal unique.

Le dépouillement consiste en un ensemble d'opérations qui, à partir :
- des sources (bandes magnétiques contenant le signal reçu de télémesure),
- des centres de contrôle et/ou d'acquisition,
- de la description des caractéristiques de signal de ces sources,
- de la description de l'agencement de données contenues dans les sources, (c'est-à-dire "le format")
- des traitements de dépouillement associés (étalonnage),
- des caractéristiques des mesures, permet de restituer l'information fondamentale intéressant les exploitants, à savoir les mesures contenues dans la télémesure.

La constitution du format nécessite de connaître les informations suivantes :
- l'architecture des chaînes de mesure à l'émission (unités d'acquisition, unités centrales, émetteurs,....etc) ;
- les caractéristiques des chaînes de mesure correspondant aux grandeurs physiques des capteurs :
. débit en points par seconde,
. phase d'observation,
. précision/datation,
. résolution (format de numérisation de la donnée),
. traitements (différé, compression de données....),
- les caractéristiques des données fonctionnelles et d'espionnage bus ;
- les caractéristiques des unités d'acquisition et des unités centrales (débit maximum, architecture interne, performance) ;
- la constitution de la mission, savoir par exemple s'il s'agit de la séparation d'un étage dans le cas du lancement d'une fusée.

Il ressort donc que d'une part la constitution d'un format n'est pas aisée et que d'autre part, la diffusion des différents formats employés est très large.

Même si pour certains formats, tels que les formats IRIG, la présentation est à peu près normalisée sur un support papier, ce n'est pas le cas pour un grand nombre d'autres formats pour lesquels on assiste à une description "à la main", dans une forme non normalisée et propre à chaque utilisateur de mesure soumis aux particularités des unités centrales et à l'architecture des chaînes de mesure.

La présente invention permet de remédier à ce problème. Elle a pour but un procédé de traitement de données permettant d'obtenir une description exhaustive de l'agencement des données de tous les formats existants, susceptible d'y inclure des formats futurs.

Le procédé conforme à l'invention consiste à enregistrer dans la mémoire principale des moyens de traitement, une table de données dans laquelle toute donnée, quel que soit son format, est décrite de façon arborescente sous forme d'un champ de bits (d'éléments binaires), ledit champ étant le champ fils d'un champ père, qui peut être lui-même le fils d'un autre champ père si ce champ père n'est pas le plus haut dans la hiérarchie de l'arbre, le procédé consistant ensuite à éditer cette table de données à partir des moyens d'édition.

Selon un autre aspect de l'invention, la table de données mémorisée comporte, pour chaque champ définissant une donnée, un ensemble de zones de mémorisation dans lesquelles :

- une zone permet de mémoriser le nom du champ considéré,
- une zone permet de mémoriser sa longueur,
- une zone permet de mémoriser son type,
- une zone permet de mémoriser le nom du champ auquel il est lié,
- une zone permet de mémoriser le nom du champ père de ce champ,
- une zone permet de mémoriser la position de ce champ dans le champ père,
- une zone permet de mémoriser le contenu de ce champ.

Selon une autre caractéristique de l'invention, un champ peut avoir une position fixe ou mobile par rapport à son champ père, de même qu'un champ peut avoir une longueur fixe ou variable.

Le procédé consiste alors à mémoriser, dans la zone de mémorisation de la position du champ, un mot indiquant si cette position est fixe ou mobile.

Le procédé consiste également, dans le cas où la longueur du champ est variable, soit à mémoriser dans la zone de mémorisation le nom du champ lié qui donnera lui-même la longueur du champ considéré, soit à délimiter sa longueur par une synchronisation fin, la longueur du champ de synchronisation étant alors donnée en position relative par rapport à la fin du champ considéré.

D'autres particularités et avantages de l'invention apparaîtront à la lecture de la description qui est faite à titre illustratif et non limitatif, à partir de différents exemples, et en regard des dessins sur lesquels :

- la figure 1 représente un exemple de données séquentielles au format IRIG,
- la figure 2a représente la représentation graphique du format de la figure 1 selon un premier mode de réalisation conforme au procédé,
- les figures 2b et 2c représentent la structure en tableau du format de la figure 1 conformément à ce premier mode de réalisation,
- la figure 3a représente la structure graphique du format de la figure 1 selon un deuxième mode de réalisation,
- les figures 3b, 3c représentent la structure en tableau de ce format selon ce deuxième mode de réalisation,
- la figure 4a représente la structure graphique du format de la figure 1 conformément à un troisième mode de réalisation,
- la figure 4b représente la structure en tableau de ce format selon ce troisième mode de réalisation,
- la figure 5 représente la trame de message suivant la recommandation CCSDS,
- la figure 6a représente la représentation graphique conforme à l'invention d'une unité de données d'accès au canal CCSDS,
- la figure 6b représente la structure en tableau conformément au procédé de l'invention du message suivant la recommandation CCSDS,
- la figure 7 représente un deuxième exemple de mot particulier au format IRIG,
- la figure 8a représente la représentation graphique de ce mot conformément au procédé,
- la figure 8b représente la structure en tableau de ce mot conformément au procédé,
- la figure 9 représente un autre exemple de mot au format IRIG ; il s'agit d'informations fonctionnelles,
- la figure 10 représente la représentation graphique de ces informations fonctionnelles conformément au procédé,
- la figure 11 représente la structure en tableau de ces informations fonctionnelles conformément au procédé.

Le procédé conforme à l'invention va être détaillé à partir de différents cas, donnés à titre d'exemple.

Ces cas illustrent les différents aspects de l'invention et notamment l'aspect traitement de données, de manière à obtenir une structure arborescente de ces données capable de décrire tout type de format. Cette structure se trouve mémorisée sous la forme d'un tableau du format qui peut être édité sous cette forme. Ces cas illustrent également l'aspect traitement de données pour obtenir un affichage de la structure de données sur écran sous la forme d'un graphique.

En effet, le procédé consiste à :
- enregistrer dans la mémoire principale d'un moyen de traitement tel qu'un ordinateur, une table de données dans laquelle toute donnée, quel que soit son format d'origine, est décrite de façon arborescente sous forme d'un champ d'éléments binaires (de bits) qui est fils d'un champ d'éléments binaires père, le père pouvant lui-même être le fils d'un autre champ père si ledit champ père n'est pas le plus haut dans la hiérarchie de l'arbre,

- éditer la table de données à partir des moyens d'édition.

La table de données mémorisée comporte pour chaque champ définissant une donnée un ensemble de zones de mémorisation dans lesquelles :

- une zone permet de mémoriser sa longueur,
- une zone permet de mémoriser son type,
- une zone permet de mémoriser le nom du champ auquel il est lié,
- une zone permet de mémoriser le nom du champ père de ce champ,
- une zone permet de mémoriser la position de ce champ dans le champ père,
- une zone permet de mémoriser le contenu de ce champ.

On mémorise, dans la zone de mémorisation de la position du champ, un mot pour indiquer si cette position est fixe ou mobile.

Lorsque la position du champ est fixe, le mot indique la position du premier bit de ce champ en nombre de bits par rapport au premier bit du champ père.

Lorsque la position du champ est mobile, le contenu du mot indique que cette position est mobile ; dans ce cas, le champ comporte soit un champ fils de synchronisation, soit il est synchronisé avec un autre champ ; la zone de mémorisation du nom du champ auquel le champ considéré est lié comporte alors le nom de cet autre champ.

On mémorise, dans la zone de mémorisation de la longueur du champ, un mot pour indiquer si cette longueur est fixe ou variable.

Lorsque la longueur du champ est fixe, alors le mot est la longueur décrite dans le format d'arrivée de la donnée.

Lorsque la longueur du champ est variable, alors le mot indique que cette longueur est variable ; cette longueur est donnée par le contenu d'un autre champ qui est un champ lié au champ considéré ; la zone de mémorisation du nom du champ lié pour le champ considéré comporte alors le nom du champ lié.

Lorsque la longueur du champ est variable, alors cela peut se traduire de deux façons :

- le champ contient un nom de champ lié qui donne lui-même la longueur du champ considéré, ou bien
- le champ a une longueur délimitée par une synchronisation fin, la longueur du champ de synchronisation est alors donnée en position relative par rapport à la fin du champ considéré.

Le type de champ peut être un format.

Le type de champ peut être un paramètre.

Le type de champ peut être une synchronisation.

Le type de champ peut être une longueur.

Le type de champ peut être un code détecteur d'erreur ou correcteur d'erreur.

Bien entendu d'autres types de champs peuvent être prévus.

La description graphique des données consiste à faire correspondre à chaque champ décrit dans la table mémorisée un symbole graphique à l'écran.

Cette description consiste à enregistrer en mémoire une table de correspondance entre les champs (en tenant compte de leurs caractéristiques) et des symboles graphiques également enregistrés.

Le symbole graphique enregistré pour représenter un champ est selon un mode préféré de réalisation un rectangle.

D'autre part, on affiche un rectangle de taille proportionnelle à la longueur du champ (quand celui-ci est fixe).

On affiche un rectangle comportant un premier type de marquage pour indiquer que le champ a une position mobile par rapport à son champ père. Le marquage consiste en un pointillé sur le contour par exemple.

On affiche un rectangle comportant un deuxième type de marquage pour indiquer que le champ a une longueur variable. Le marquage consiste en des hachures à l'intérieur du rectangle par exemple.

On affiche un rectangle comportant un troisième type de marquage pour indiquer que le champ est un champ de synchronisation. Le rectangle est réalisé en trait gras par exemple.

Les champs liés sont reliés par un symbole graphique de type arc.

On va tout d'abord illustrer le procédé conforme à l'invention à partir d'un premier cas correspondant à des données au format IRIG.

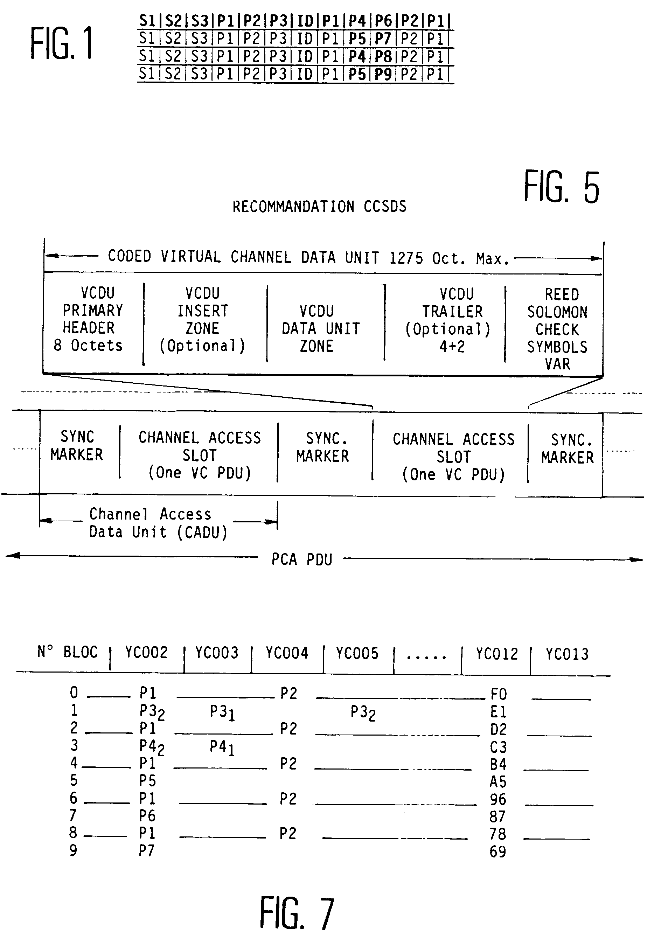

La figure 1 représente une grille IRIG de mots de huit bits.

Cette grille est formée des paramètres P1 à P8 qui sont des mesures sur huit bits et du paramètre P9 qui contient cinq mesures. La grille comporte également trois mots de synchronisation S1, S2, S3 de huit bits chacun. La grille comporte en outre un mot d'identification de cycle ID.

Les paramètres indiqués à chaque ligne de la grille apparaissent à chaque cycle court. La totalité des paramètres apparaît au bout de quatre cycles courts constituant un cycle long.

Le paramète P1 apparaît trois fois durant un cycle : c'est un paramètre surcommuté d'ordre 3.

Le paramètre P2 apparaît deux fois dans le cycle : c'est un paramètre surcommuté d'ordre 2 ; P3 apparaît une fois ; quant aux paramètres P4, P6, P5, P7, P8, P9 : il s'agit de paramètres sous-commutés.

Le paramètre P9 contient en fait cinq mesures binaires (bit d'état 0 ou 1) T1 à T5. TF1-TF2 sont des champs de contenu fixe.

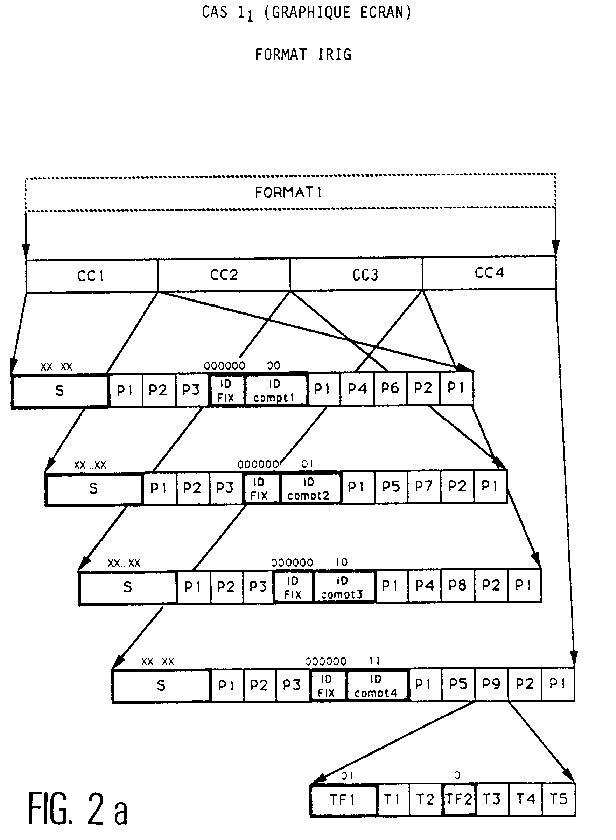

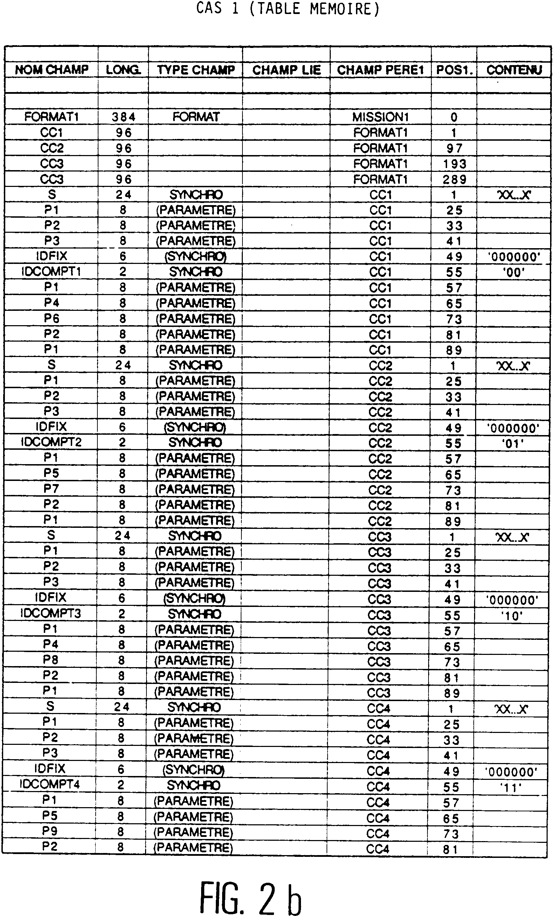

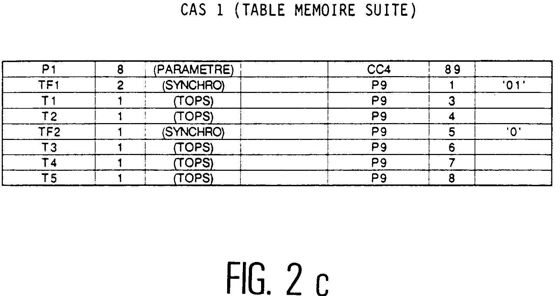

Selon un premier exemple de réalisation illustré par les figures 2a, 2b et 2c, les données séquentielles du format IRIG représentées sur la grille de la figure 1 sont décrites comme un champ père de position mobile dans le temps, contenant quatre champs fils de position fixe et de longueur fixe.

Un champ fils est prévu pour décrire chaque cycle court du format. Ainsi, on a un champ père dont le nom est FORMAT1 et des champs fils CC1, CC2, CC3 et CC4.

Le premier champ fils CC1 comporte lui-même des champs fils qui sont petits-fils du champ FORMAT1.

Le champ CC1 comporte un premier fils qui est un champ de synchronisation S, suivi d'un ensemble de champs binaires qui correspondent chacun aux différents paramètres apparaissant au cours du premier cycle court, soit les paramètres P1, P2, P3, P4, P6, P2, P1 et deux champ d'identification.

Un premier champ d'identification IDFIX est fixe et peut servir de deuxième synchronisation. Un deuxième champ d'identification IDCOMPT1 sert à identifier le cycle en indiquant s'il s'agit du premier, du deuxième, du troisième ou du quatrième cycle. Il est indispensable à la synchronisation du champ CC1.

Les différents champs S, P1, P2, P3, IDFIX, IDCOMPT1 du champ CC1 n'ont pas de fils.

Le champ CC2 comporte de la même manière un ensemble de champs fils de position fixe et de longueur fixe. Les fils du champ CC2 sont un champ de synchronisation S, les paramètres P1, P2, P3, P1, P5, P7, P2, P1, un champ d'identification fixe IDFIX et un champ d'identification IDCOMPT2. Ces champs n'ont pas de champs fils.

Le champ CC3 a pour champ fils un champ de synchronisation S, les champs contenant les paramètres P1, P2, P3, P1, P4, P8, P2, P1 et un champ d'identification fixe IDFIX et un champ d'identification IDCOMPT3. Ces champs n'ont pas de champs fils.

Le champ CC4 a pour champ fils un champ de synchronisation S, les champs contenant les paramètres P1, P2, P3, P1, P5, P9, P2 et P1 et également un champ d'identification fixe IDFIX et un champ d'identification IDCOMPT4.

Le champ contenant le paramètre P9 a des champs fils qui sont :
- un champ TF1 qui contient deux bits fixes, qui peuvent servir de synchronisation et qui correspondent aux champs T1 et T2,
- un champ TF2 qui contient également un bit fixe qui peut servir de synchronisation puis T3, T4 et T5, ces champs n'ayant pas de champs fils (T1 à T4 sont des bits d'état).

La description structurelle des données relatives à cette réalisation dans une table en mémoire a été éditée et représentée sur les figures 2a, 2b et 2c.

La structure des données en mémoire se présente donc de la manière suivante :

Une zone mémoire est prévue pour mémoriser le nom du champ considéré, une zone mémoire est ensuite prévue pour mémoriser la longueur de ce champ, une autre zone mémoire est prévue pour mémoriser le type du champ, une autre zone mémoire est prévue pour indiquer si le champ est lié, une autre zone mémoire est prévue pour mémoriser le nom du champ père, une autre zone mémoire est prévue pour mémoriser la position du champ considéré et enfin, une dernière zone mémoire est prévue pour mémoriser le contenu du champ (cf. figures 2b, 2c).

Dans la table mémorisée, on va trouver répertorié dans les zones relatives au nom du champ, l'ensemble des champs pères et fils qui ont été décrits à propos de la figure 2, selon un ordre qui peut être absolument quelconque.

Ainsi, l'on va trouver comme nom de champ FORMAT1 ayant pour longueur 384. Il s'agit d'un type de champ correspondant à un format, ce champ n'a pas de champ lié, le champ père est par exemple un champ MISSION non représenté sur le graphique de la figure 2a, la zone concernant la position de ce champ contiendra un zéro qui par convention signifiera que cette positon est mobile.

La zone de nom de champ va contenir également le champ CC1, la longueur mémorisée est 96, la zone relative au champ père va contenir le nom FORMAT 1 et la zone relative à la position va contenir un 1 qui signifie que le 1er bit de ce champ est dans le premier bit du champ père.

La zone correspondant au nom de champ contient également le champ CC2. La longueur de champ enregistrée est 96. Le champ père de ce champ CC2 mémorisé est le champ FORMAT1 et sa position est 97, le premier bit du champ CC2 étant à la 97ème position par rapport au début du champ père FORMAT1.

Les champs CC3 et CC4 ont la même longueur que les champs qui viennent d'être décrits, le père de ces champs enregistré dans la zone concernant le champ père est le même, c'est-à-dire FORMAT1. La position enregistrée pour ces champs est respectivement 193 pour le champ CC3 et 289 pour le champ CC4.

Les noms des champs enregistrés ensuite dans la zone nom de champ sont successivement les champs fils du champ CC1, puis les champs fils du champ CC2.

On trouve ensuite enregistrés dans la zone concernant les noms des champs, les noms des champs fils des champs CC3 puis CC4.

La zone correspondant au type de champ est renseignée pour les champs de synchronisation S, les paramètres P1 à P9 pour également les champs de synchronisation IDFIX et IDCOMPT1, 2, 3 et 4.

L'information concernant le type de champ peut ne pas être renseignée lorsqu'elle n'est pas indispensable pour la description du champ. Il s'agit par exemple des cas pour lesquels le type de champ a été mis entre parenthèses dans les tables mémoires (cf figures 2b, 2c, 3b, 3c, 4b, 6b, 8b et11).

On trouve enregistrés dans la zone concernant les noms des champs, les champs fils du champ P9. Ces champs sont les champs TF1, T1, T2, TF2, T3, T4 et T5.

Les zones concernant le type de champ sont également renseignées pour les champs fils du champ P9.

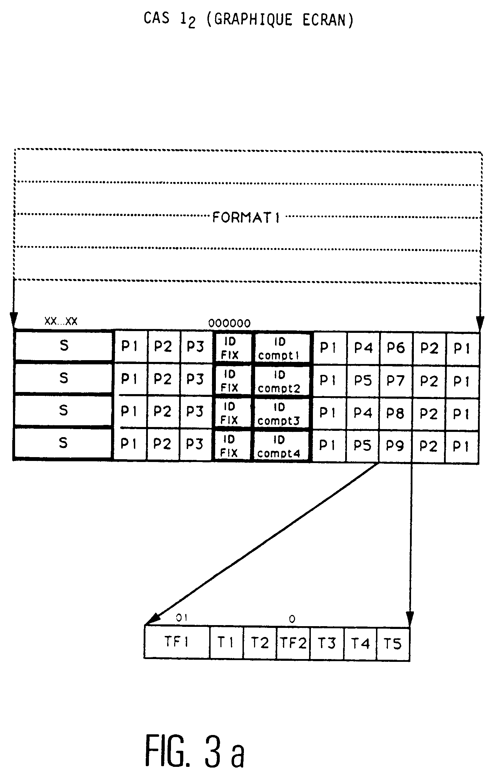

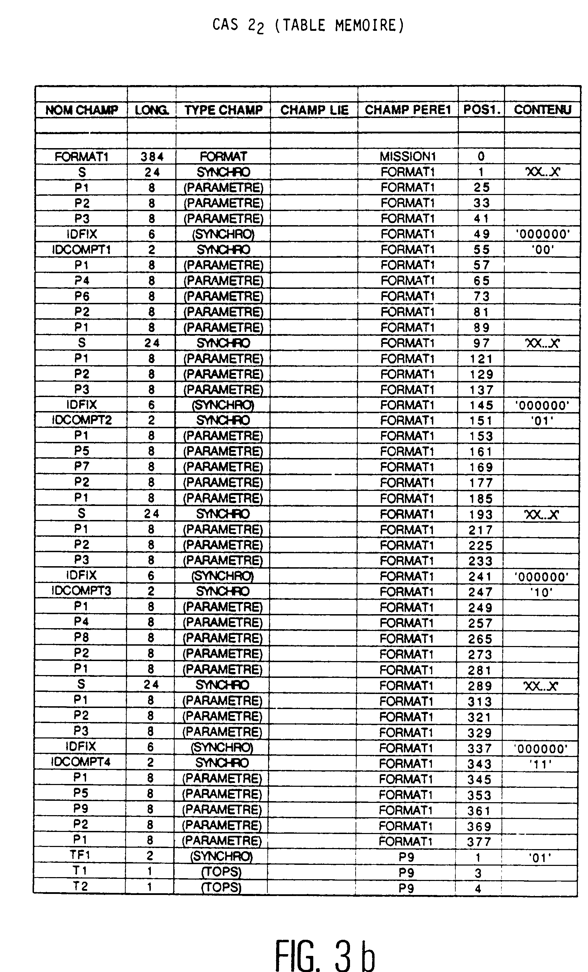

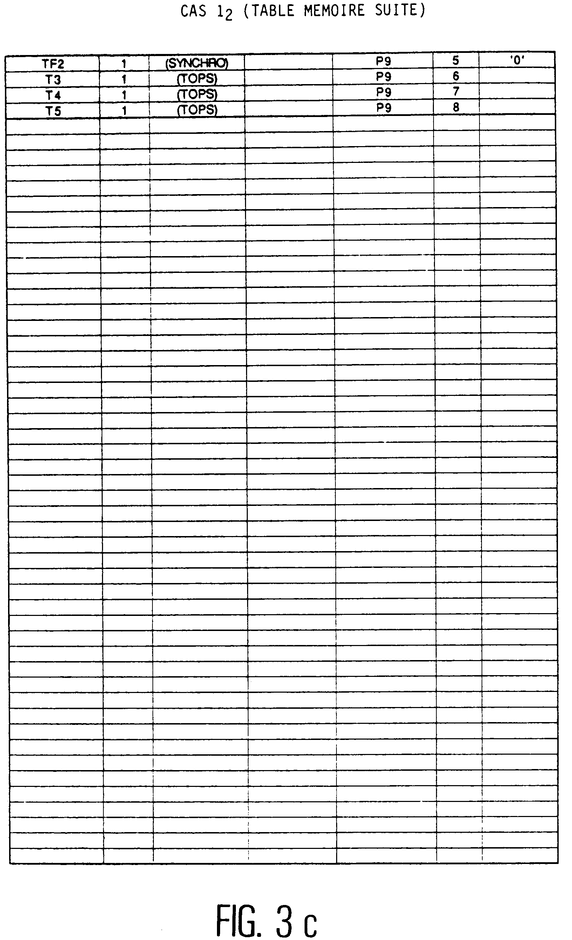

Un deuxième mode de réalisation est donné et illustré au moyen des figures 3a, 3b et 3c.

La figure 3a représente la structure graphique selon le procédé conformément à ce deuxième mode de réalisation.

Les figures 3b et 3c représentent la structure de données, mémorisée sous forme d'une table.

Selon ce mode de réalisation, la donnée de format IRIG de la figure 1 est enregistrée sous la forme d'un premier champ d'éléments binaires dont le nom est FORMAT1, dont la longueur est 384, dont le type est FORMAT.

Ce champ a pour champ père un champ fictif tel que décrit sur la figure 3b, portant le nom MISSION I.

Le champ FORMAT est un champ de position mobile dans le temps, la zone d'enregistrement de la position en mémoire porte un zéro conformément à la convention qui a été prise au départ.

Le champ appelé FORMAT1 comporte 44 champs fils qui correspondent en fait aux champs fils des champs CC1, CC2, CC3, CC4, du premier mode de réalisation.

Ainsi, le champ FORMAT1 a pour fils un champ de synchronisation S, le paramètre P1, le paramètre P2, le paramètre P3, le mot de synchronisation IDFIX, le mot de synchronisation IDCOMPT1, le paramètre P1, le paramètre P4, le paramètre P6, le paramètre P2 et le paramètre P1.

De la même façon, le champ FORMAT1 a pour champs fils les données séquentielles correspondant au deuxième cycle court du tableau de la figure 1, avec comme champ fils supplémentaire un champ de synchronisation qui est le premier champ fils à l'intérieur du champ père FORMAT1.

Le champ FORMAT1 a également pour champs fils les données séquentielles du troisième cycle court et du quatrième cycle court.

Le premier champ de synchronisation fils se trouve en position 1, le deuxième se trouve en position 97 à l'intérieur du champ père, le troisième se trouve en position 193 et le quatrième se trouve en position 289 dans ce champ père.

Le paramètre P9 est enregistré comme étant le champ fils du champ FORMAT1, mais également comme étant le champ père des champs TF1, T1, T2, TF2, T4 et T5.

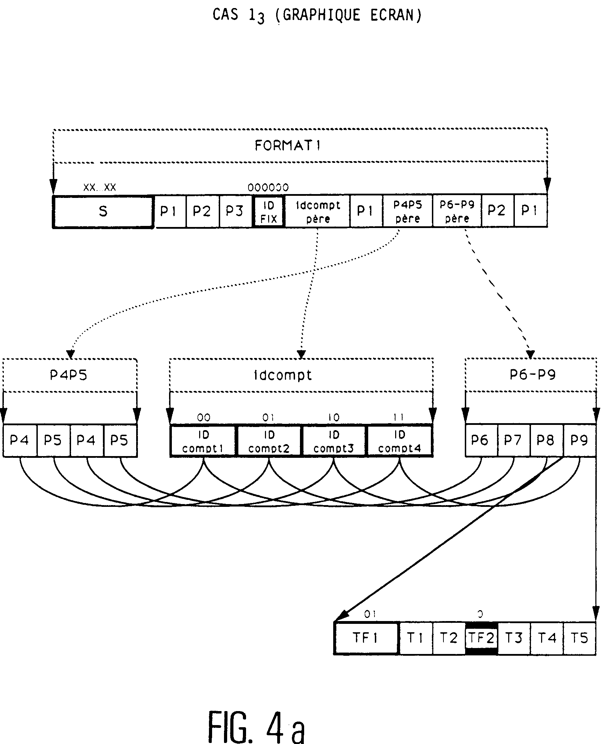

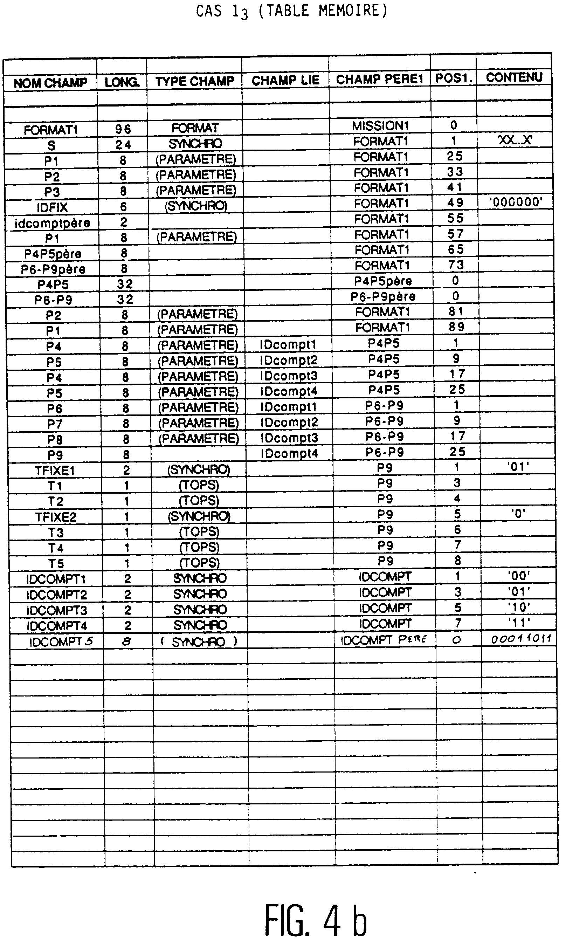

Les figures 4a et 4b concernent un troisième mode de réalisation de ces données séquentielles de FORMAT IRIG, représenté sur la figure 1. Dans ce mode de réalisation, la notion de cycle long disparaît complètement.

Le format des données séquentielles est mémorisé comme un champ d'éléments binaires dont le nom est FORMAT1 ayant une longueur de 96.

Ce champ FORMAT1 a pour fils un champ de synchronisation S, un champ pour le paramètre P1, un champ pour le paramètre P2, un champ pour le paramètre P3, un champ pour la synchronisation IDFIX, un champ pour la synchronisation IDCOMPTPERE, un champ pour le paramètre P1, un champ pour les paramètres P4, P5, un champ pour les paramètres P6 à P9, un champ pour le paramètre P2 et un champ pour le paramètre P1.

Le champ IDCOMPT est un champ de position mobile par rapport au champ IDCOMPTPERE qui a pour champs fils les champs IDCOMPT1, IDCOMPT2, IDCOMPT3, IDCOMPT4 qui sont eux des champs de longueur et de position fixes.

Le champ pour les paramètres P4 et P5 est un champ de position mobile dans le temps et qui a pour champs fils les paramètres P4, P5, P4, P5.

Le champ pour les paramètres P6 à P9 est un champ père de position mobile dans le temps qui a pour fils les champs pour les paramètres P6, P7, P8 et P9.

On a donc créé dans cette solution un champ père IDCOMPT qui est fils du champ IDCOMPTPERE et qui est un champ mobile par rapport à son champ père IDCOMPTPERE, ayant pour champs fils les différents champs de synchronisation IDCOMPT1, IDCOMPT2, IDCOMPT3, IDCOMPT4.

Chaque champ de synchronisation IDCOMPT 1, 2, 3, 4 permet d'indiquer la présence du paramètre auquel il est affecté. C'est pourquoi les champs concernant les paramètres P4, P5, P6, P7, P8, P9 sont liés chacun à l'un de ces compteurs :

- P4 est lié au compteur IDCOMPT1, lequel est lié au champ contenant le paramètre P6,
- P5 est lié au compteur IDCOMPT2, lequel est lié au champ contenant le paramètre P7,
- le deuxième champ P4 est lié au compteur IDCOMPT3, lequel est lié au champ contenant le paramètre P8,
- le deuxième champ P5 est lié au compteur IDCOMPT4, lequel est lié au champ contenant le paramètre P9.

Le champ contenant le paramètre P9 a des champs fils : il s'agit du champ TF1, des champs T1, T2, TF2, T3, T4 et T5.

On va maintenant décrire un exemple de traitement des données suivant le procédé conforme à l'invention à partir d'un deuxième cas qui est la recommandation CCSDS 101.0-B-2,

Cette norme permet de définir des protocoles de transmission de données de télémétrie ou de télécommandes.

On ne va bien sûr par détailler les différents protocoles de transmission et la structure de la trame décrite dans cette recommandation.

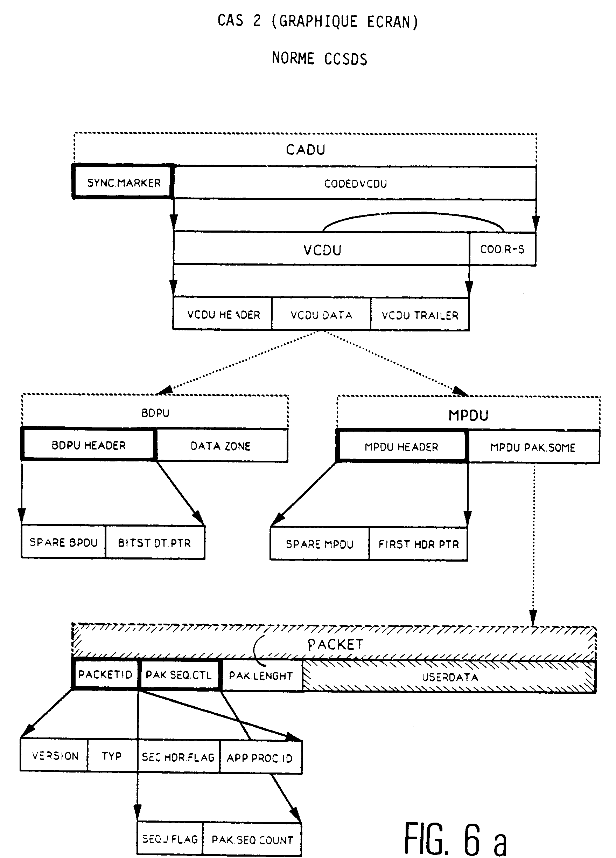

Pour plus de détails, on pourra par conséquent, se reporter à cette recommandation. Simplement pour illustrer l'exemple, on a représenté la structure de la trame de façon partielle sur la figure 5.

Par ailleurs, on a conservé la terminologie anglo-saxonne pour la définition de chaque paquet de la trame, telle qu'elle est donnée dans la norme CCSDS, afin de mieux suivre l'analogie qu'il y a entre les abréviations employés et les définitions des paquets.

La trame comporte un ensemble noté CADU qui est l'abréviation de l'expression anglo-saxonne "Channel Access Data Unit".

Ce canal est décrit conformément au procédé sous la forme d'un champ d'éléments binaires CADU de longueur fixe et de position mobile dans le temps. Le champ d'éléments binaires CADU est le champ père d'un champ fils appelé synchronisation marqueur SYNC MARKER, qui correspond à un mot de synchronisation permettant de reconnaître l'arrivée de la trame.

Le champ CADU a également pour champ fils un champ de longueur fixe et de position fixe dénommé CODEDVCDU.

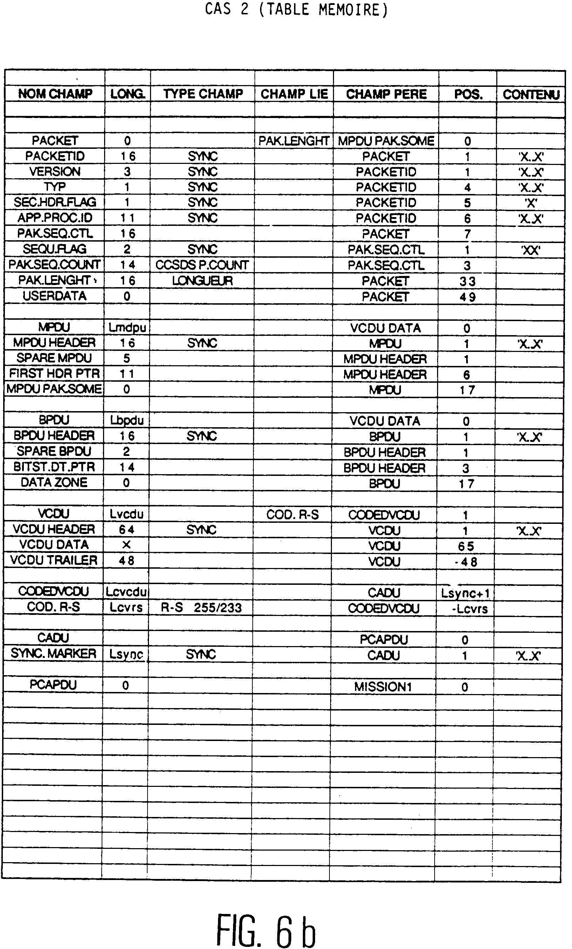

Le champ CADU a une position mobile dans le champ père qui est la trame PCA PDU (non indiqué sur la figure 6a).

Le champ de synchronisation SYNC MARKER est donc mémorisé dans la table, le nom de ce champ étant mémorisé dans la zone nom de champ, sa longueur est donnée dans la zone longueur, son type est également donné dans la zone type de champ. La zone champ père est renseignée, le champ père étant le champ CADU, et sa position est 1 puisqu'il s'agit du premier champ fils du champ CADU.

Le champ CODEDVCDU a un premier champ fils VCDU qui correspond en fait à la donnée utile, lequel champ est relié à un deuxième champ fils du champ CODEDVCDU et qui porte le nom COD.R-S ; ce champ correspond au codage REED SOLOMON qui est un codage de détection et de correction d'erreur.

Le nom VCDU du champ fils est mémorisé dans la zone de la table correspondant au nom de champ, sa longueur est mémorisée dans la zone longueur. La zone correspondant au champ lié est également renseignée et porte le nom du champ COD.R-S. La zone correspondant au champ père porte le nom du champ CODEDVCDU. La zone correspondant à la position du champ VCDU comporte un 1 puisque ce champ est le premier champ du champ CODEDVCDU.

Le nom du champ COD.R-S apparaît également dans la zone mémoire concernant le nom du champ. Sa longueur est mentionnée dans la zone longueur, le type de champ porte l'indication RS255 233 (car il s'agit du code REED SOLOMON de type 255/233). Dans la zone de champ père est enregistré le nom CODEDVCDU et dans la zone position est enregistrée la longueur de ce champ par rapport à la fin de ce champ (convention de position négative qui donne une position relative à la fin du champ père).

Le champ VCDU comporte trois champs fils, un champ VCDU HEADER, un champ VCDU DATA, un champ VCDU TRAILER.

La zone nom de champ de la table comporte donc le champ VCDU HEADER, la zone longueur comporte 64 qui est la longueur de ce champ, la zone type de champ comporte l'information synchronisation et la zone champ père comporte le nom VCDU qui est le champ père de ce champ. La zone position comporte un 1 signifiant qu'il s'agit du premier champ dans le champ père VCDU.

La zone de nom du champ dans la table comporte également le nom du champ VCDU DATA. Ce champ est un champ de position fixe et de longueur fixe mais indéterminée X.

Les autres champs fils du champ VCDU sont des champs de position fixe.

Le champ VCDU DATA est considéré comme un champ de position fixe et on lui associe deux champs fils de position mobile qui sont les champs BDPU et MPDU.

Le champ BDPU mobile par rapport à son champ père VCDUDATA comporte un champ de synchronisation qui permet de repérer son arrivée, il s'agit du champ BDPU HEADER, et un autre champ fils, il s'agit du champ DATA ZONE.

De la même façon le champ MDPU est mobile par rapport à son champ père VCDUDATA et comporte un champ fils qui est un champ de synchronisation, il s'agit du champ MPDU HEADER, et un autre champ fils MPDU PACK SOME.

Tous ces champs apparaissent également enregistrés dans la zone nom de champ de la table mémorisée.

Les champs de synchronisation ont également chacun deux champs fils, il s'agit des champs S pour BPDU et BIT DT PTR pour le champ BDPU HEADER et les champs SPARE MPDU et FIRST HDR PTR pour le champ MPDU HEADER.

Le champ MPDU PACK SOME est un champ de position fixe et de longueur fixe. Il possède un champ fils PACKET ayant une position mobile et une longueur variable. Ce champ est relié à un champ fils qui donne sa longueur, il s'agit du champ PAK LENGHT. Il comporte en outre un premier champ fils de synchronisation, il s'agit du champ PACKETID ; un deuxième champ fils de synchronisation, il s'agit du champ PACK SEQ CTL et un champ fils de données utiles, il s'agit du champ USER DATA, ce champ étant un champ de longueur variable.

Les champs de synchronisation sont décrits comme des champs ayant des champs fils, les champs fils du champ PACKETID sont le champ VERSION, TYP, SEC, HDR, FLAG, APP, PROC, ID.

Les champ fils du champ PACK.SEQ.CTL sont les champs SEQ.J.FLAG et le champ PAK.SEQ.COUNT.

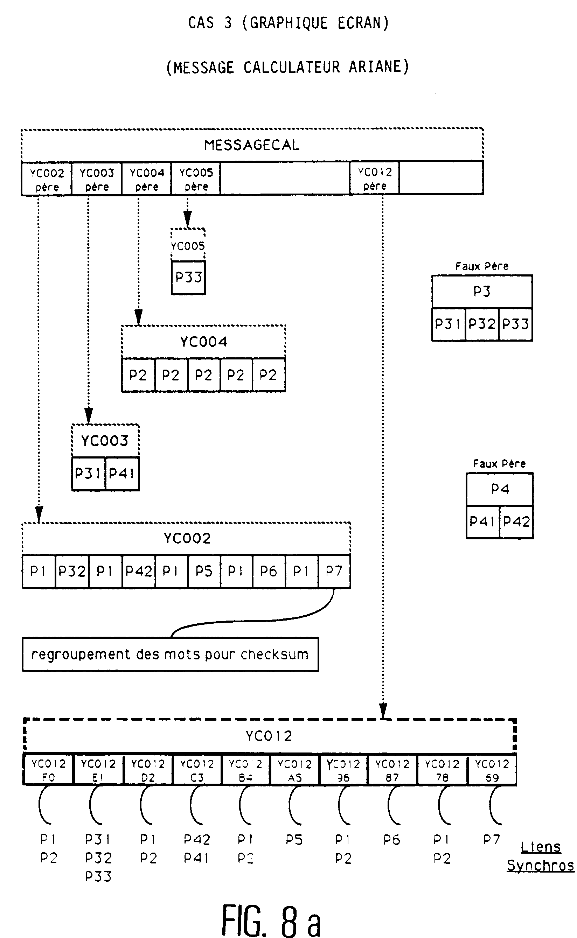

On va maintenant décrire un troisième cas permettant d'illustrer le procédé conforme à l'invention. Il s'agit de décrire un message calculateur contenu dans un format IRIG, tel que présenté sur la grille IRIG de la figure 7.

Ce message calculateur est selon l'exemple particulier qui est donné un message calculateur ARIANE 1.

La grille IRIG se présente sous la forme suivante : elle comporte une colonne relative aux numéros de blocs, puis des colonnes pour chacun des paramètres YCOO2, YCOO3, YCOO4, YCOO5,..........YCO13.

Un cycle court est défini par l'arrivée d'un bloc et un cycle long est défini par l'arrivée de tout le message, c'est-à-dire de l'ensemble des blocs.

Le paramètre YCO12 correspond à un mot d'identification du bloc.

Les paramètres P1 et P2 sont sous-commutés d'ordre 2. Les paramètres P3 à P7 sont sous-commutés d'ordre 10.

Le paramètre P3 est un paramètre sur 24 bits. Il est donc constitué des paramètres P31, P32, P33, chacun ayant huit bits.

Le paramètre P4 est un paramètre sur seize bits. Il est donc constitué des paramètres P41 et P42, chacun de huit bits.

Le paramètre P5 est un paramètre de huit bits.

Le paramète P7 permet un contrôle sommaire de la qualité globale du message par une vérification "CHECKSUM" de tous les mots.

Le message calculateur est donc décrit conformément au procédé comme un champ d'éléments binaires "MESSAGECAL" de position mobile car il s'agit d'informations asynchrones. Ce champ est le fils d'un champ père plus haut dans la hiérarchie, non mentionné mais qui peut être par exemple le numéro de vol de la fusée ARIANE.

Le champ MESSAGECAL est constitué d'un ensemble de champs d'éléments binaires fils qui correspondent aux données YCOO2, YCOO3,.......YCO12, d'autres données pouvant être comprises dans le message.

Les données YCOO2PERE,..... YCO12PERE sont décrites comme les champs pères du champ fils YCOO2 et respectivement des champs fils YCOO3, YCOO4, YCOO5, YCO12, les champs fils YCOO2 à YCOO5 sont des champs de position mobile dans le temps.

Le champ YCOO2 comporte les champs P1, P32, P1, P42, P1, P5, P1, P6, P1, P7.

Le champ YCOO2 est donc décrit comme un champ d'éléments binaires de position mobile, constitué de l'ensemble des paramètres reçus pendant un cycle long.

De la même façon, le champ mobile YCOO3 comporte les paramètres P31 et P41 reçus pendant un cycle long.

Le champ YCOO4 comporte des champs fils correspondant aux paramètres P2, P2, P2, P2, P2 qui sont les données reçues pendant un cyle long.

Le champ YCOO5 a un seul fils, il s'agit du paramètre P33, paramètre reçu au cours d'un cycle long permettant d'obtenir la totalité d'un message.

Le champ YCO12 est un champ de synchronisation qui est constitué des champs fils YCO12 FO, YCO12 E1, YCO12 D2, YCO12 C3, YCO12 B4, YCO12 A5, YCO12 96, YCO12 87, YCO12 78, YCO12 69.

Chaque champ fils de ce champ de synchronisation correspond à la valeur en hexadécimal d'identification du cycle.

Tous les paramètres de la grille de la figure 7 sont reliés par un lien de synchronisation au champ d'identification du cycle correspondant.

Ainsi, les paramètres P1 et P2 sont reliés au champ YCO12 FO, les paramètres P31, P32, P33 sont reliés au champ YCO12 E1, etc... Le paramètre P7 est relié au champ d'identification YCO12 69.

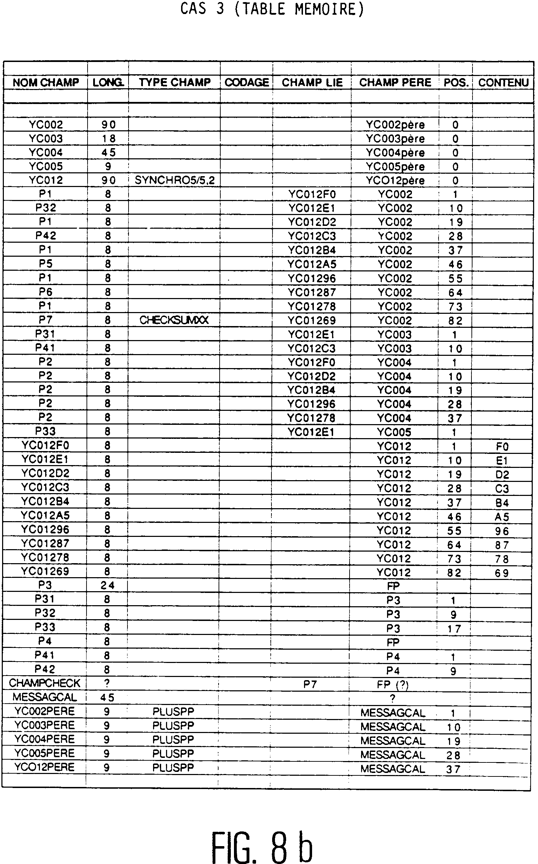

Dans la description de la table qui est en mémoire les champs P1, P2, P31, P32, P33, P1, P2, P42, P41, P1, P2, P5, P1, P2, P6, P1, P2, P7 sont mentionnés dans la zone nom de champ et la zone de champ lié comporte le champ d'identification correspondant, tel qu'on peut le voir sur les figures 8a et 8b.

Le champ P7 est par ailleurs lié à un champ qui est un champ de regroupement des mots pour CHECKSUM. Le type de champ du champ P7 est CHECKSUM.

D'autre part, comme les paramètres P3 et P4 sont des paramètres qui apparaissent l'un au cours de trois cycles courts et l'autre au cours de deux cycles courts, ces paramètes sont donc décrits conformément au procédé comme étant des champs d'éléments binaires qui sont les faux pères des paramètres P31, P32, P33 pour le paramètre P3 et des paramètres P41, P42 pour le paramètre P4.

En effet, les paramètres P31, P32, P33 ont déjà un champ père d'accueil qui est le champ YCOO3 pour le paramètre P31, YCOO2 pour le paramètre P32 et YCOO5 pour le paramètre P33.

Le paramètre P41 a déjà comme champ père le champ YCOO3 et le champ P42 a déjà comme champ père le champ YCOO2.

Ainsi, conformément au procédé, un champ d'éléments binaires peut avoir un premier champ père et un deuxième champ père ou plusieurs autres champs pères que l'on appellera alors faux pères (FP).

On va maintenant décrire un quatrième cas permettant d'illustrer le procédé conforme à l'invention. Il s'agit d'une transmission d'informations fonctionnelles sur un bus appelé UBUS, cette transmission consistant à envoyer des informations fonctionnelles avec des mots au format IRIG.

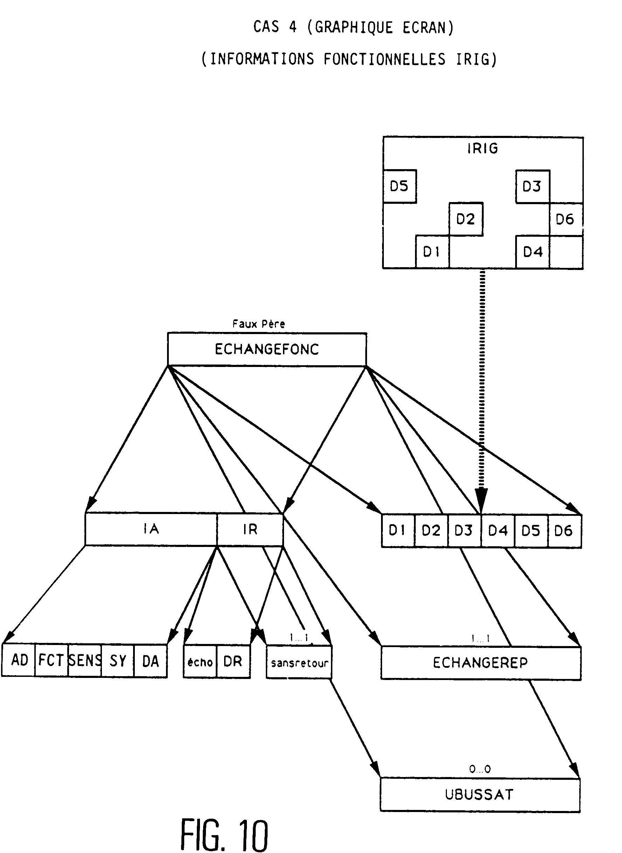

Ces mots sont des mots portant la référence D1, D2, D3, D4, D5, D6. Ils sont représentés sur une grille IRIG sur la figure 10.

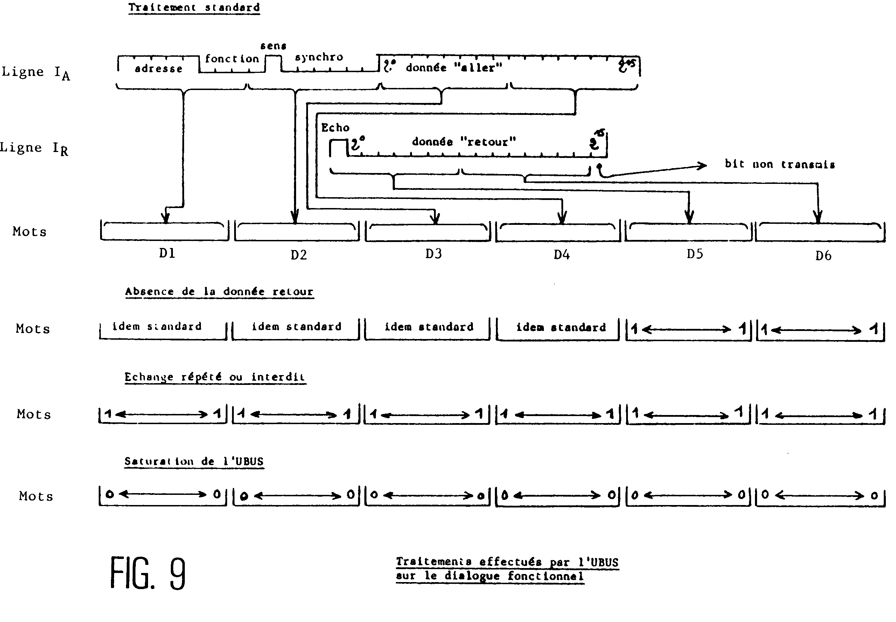

L'échange dans le sens "aller" correspond à la ligne IA de la figure 9. Il y a tout d'abord un mot d'adresse du périphérique qui doit recevoir l'information, un mot de fonction, un mot indiquant le sens de l'échange, un mot de synchronisation et un mot pour la donnée "aller".

Le sens "retour" correspond à la ligne IR. Il comporte un mot correspondant à un écho et un mot correspondant à la donnée "retour".

Les lignes IA et IR correspondent à un traitement standard.

Les données D1, D2, D3 et D4 correspondent aux échanges sur la ligne "aller" et les données D5, D6 correspondent à la ligne "retour".

En l'absence de donnée "retour", les mots D1, D2, D3, D4 sont identiques au traitement standard, tandis que les mots D5, D6 ne comportent que des 1.

Lorsque l'échange est répété ou interdit, les mots D1, D2 jusqu'à D6 ne contiennent que des 1.

Lorsque le bus est saturé, tous les mots D1 à D6 contiennent uniquement des zéros.

Les paramètres fonctionnels D1 à D6 sont des champs d'éléments binaires de longueur fixe et ayant comme champ père le champ format IRIG, noté IRIG dans la zone de la table mémoire concernant le nom du champ père.

Ces paramètres sont décrits comme étant également des champs d'éléments binaires ayant comme champ père le champ ECHANGEFONC qui est à ce moment là un faux père.

Dans ce champ père ECHANGEFONC, les paramètres ont une longueur différente de celle qu'ils ont dans le champ père IRIG. En effet, cette filiation permet de ne pas tenir compte du bit de parité.

Le champ d'éléments binaires ECHANGEFONC permet de décrire à la fois le traitement standard, c'est-à-dire la ligne IA et la ligne IR et les mots D1 à D6 suivant les différents cas qui ont été évoqués à propos de la figure 9, c'est-à-dire la suite de mots D1 à D9 en l'absence de donnée "retour" lorsque l'échange est répété ou interdit ou bien alors lorsqu'il y a saturation du bus.

Pour cela, le champ d'éléments binaires ECHANGEFONC comporte des champs fils qui vont correspondre à un champ IA correspondant au sens "aller" de l'information, un champ IR correspondant au sens "retour", un champ ECHANGEREP correspondant au cas où il y a un échange répété ou interdit et un champ UBUSSAT correspondant au cas où le bus est saturé.

Le champ IA a pour champ fils un champ AD qui correspond à l'adresse, un champ FCT qui correspond à la fonction, un champ sens, un champ synchronisation et un champ de données "aller".

Le champ IR comporte un champ fils qui est le champ écho, un deuxième champ fils qui est le champ DR et un troisième champ fils qui indique le sens "retour".

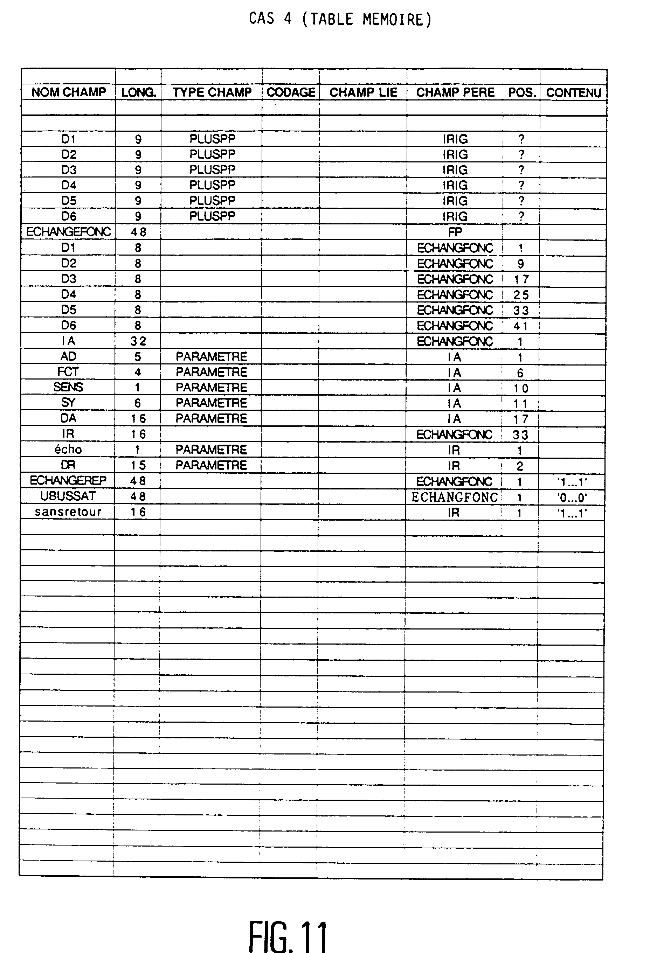

La structure de données relative à ce dialogue fonctionnel du bus UBUS est représentée en mémoire sous la forme de la table illustrée à la figure 11.

## Revendications

1. Procédé de traitement de données pour système d'échange de données par multiplex numérique sous forme d'informations synchrones et/ou asynchrones, constituées de messages numériques dans un format donné, le système comprenant une unité de traitement comportant une mémoire principale, des moyens d'affichage sur un écran et des moyens d'édition, ledit procédé étant caractérisé en ce qu'il consiste à :
   - enregistrer dans la mémoire principale des moyens de traitement, une table dans laquelle toute donnée, quel que soit son format d'origine, est décrite de façon arborescente sous forme d'un champ d'éléments binaires (de bits) qui est le fils d'un champ d'éléments binaires père, le père pouvant lui-même être le fils d'un autre champ père si ledit champ père n'est pas le plus haut dans la hiérarchie de l'arbre,
   - éditer la table de données à partir des moyens d'édition.

2. Procédé de traitement selon la revendication 1, caractérisé en ce que la table de données mémorisée comporte, pour chaque champ définissant une donnée, un ensemble de zones de mémorisation dans lesquelles :
   - une zone permet de mémoriser le nom du champ considéré,
   - une zone permet de mémoriser sa longueur,
   - une zone permet de mémoriser son type,
   - une zone permet de mémoriser le nom du champ auquel il est lié,
   - une zone permet de mémoriser le nom du champ père de ce champ,
   - une zone permet de mémoriser la position de ce champ dans le champ père,
   - une zone permet de mémoriser le contenu de ce champ.

3. Procédé de traitement selon la revendication 1 ou 2, caractérisé en ce qu'il consiste à mémoriser dans la zone de mémorisation de la position du champ, un mot pour indiquer si cette position est fixe ou mobile par rapport à son champ père.

4. Procédé de traitement selon la revendication 3, caractérisé en ce que lorsque la position du champ est fixe, le mot indique la position du premier bit de ce champ en nombre de bits par rapport au premier bit du champ père.

5. Procédé de traitement selon la revendication 3, caractérisé en ce que lorsque la position du champ est fixe, le mot indique la position du champ par rapport à la fin du champ père.

6. Procédé de traitement selon la revendication 3, caractérisé en ce que lorsque la position du champ est mobile par rapport à son champ père, le contenu du mot indique que cette position est mobile ; le champ comporte soit un champ fils de synchronisation, soit il est synchronisé avec un autre champ ; la zone de mémorisation du nom du champ auquel le champ considéré est lié comporte alors le nom de cet autre champ.

7. Procédé de traitement selon l'une quelconque des revendications précédentes, caractérisé en ce qu'il consiste à mémoriser dans la zone de mémorisation de la longueur du champ, un mot pour indiquer si cette longueur est fixe ou variable.

8. Procédé de traitement selon la revendication 7, caractérisé en ce que lorsque la longueur du champ est fixe, alors le mot est la longueur décrite dans le format d'arrivée de la donnée.

9. Procédé de traitement selon la revendication 7, caractérisé en ce que lorsque la longueur du champ est variable, alors :
   - le champ contient un nom de champ lié qui donne lui-même la longueur du champ considéré, ou bien
   - le champ a une longueur délimitée par une synchronisation fin, la longueur du champ de synchronisation est alors donnée en position relative par rapport à la fin du champ considéré.

10. Procédé de traitement selon l'une quelconque des revendications 1 à 9, caractérisé en ce qu'il consiste en outre à réaliser une description graphique des données de manière à afficher ce graphique à l'écran ou sur papier.

11. Procédé de traitement selon la revendication 10, caractérisé en ce que la description graphique consiste à faire correspondre à chaque champ un symbole graphique à l'écran.

12. Procédé de traitement selon la revendication 11, caractérisé en ce que le symbole graphique est un rectangle.

13. Procédé de traitement selon la revendication 12, caractérisé en ce qu'il consiste à afficher un rectangle de taille proportionnelle à la longueur du champ lorsque cette longueur est fixe.

14. Procédé de traitement selon la revendication 12, caractérisé en ce qu'il consiste à afficher un rectangle comportant un premier type marquage pour indiquer que le champ a une position mobile.

15. Procédé de traitement selon la revendication 12, caractérisé en ce qu'il consiste à afficher un rectangle comportant un deuxième type marquage pour indiquer que le champ a une longueur variable.

16. Procédé de traitement selon la revendication 12, caractérisé en ce qu'il consiste à afficher un rectangle comportant un troisième type marquage lorsque le champ est un champ de type synchronisation.

17. Procédé de traitement selon l'une quelconque des revendications 10 à 16, caractérisé en ce qu'il consiste à relier les champs liés par un symbole graphique.

FIG. 1

| S1 | S2 | S3 | P1 | P2 | P3 | ID | P1 | P4 | P6 | P2 | P1 |
|----|----|----|----|----|----|----|----|----|----|----|----|
| S1 | S2 | S3 | P1 | P2 | P3 | ID | P1 | **P5** | **P7** | P2 | P1 |
| S1 | S2 | S3 | P1 | P2 | P3 | ID | P1 | **P4** | **P8** | P2 | P1 |
| S1 | S2 | S3 | P1 | P2 | P3 | ID | P1 | **P5** | **P9** | P2 | P1 |

FIG. 5

RECOMMANDATION CCSDS

CODED VIRTUAL CHANNEL DATA UNIT 1275 Oct. Max.

| VCDU PRIMARY HEADER 8 Octets | VCDU INSERT ZONE (Optional) | VCDU DATA UNIT ZONE | VCDU TRAILER (Optional) 4+2 | REED SOLOMON CHECK SYMBOLS VAR |
|---|---|---|---|---|

| SYNC MARKER | CHANNEL ACCESS SLOT (One VC PDU) | SYNC. MARKER | CHANNEL ACCESS SLOT (One VC PDU) | SYNC. MARKER |
|---|---|---|---|---|

Channel Access
Data Unit (CADU)

PCA PDU

| N° BLOC | YC002 | YC003 | YC004 | YC005 | ..... | YC012 | YC013 |
|---------|-------|-------|-------|-------|-------|-------|-------|
| 0 | P1 | | P2 | | | F0 | |
| 1 | $P3_2$ | $P3_1$ | | $P3_2$ | | E1 | |
| 2 | P1 | | P2 | | | D2 | |
| 3 | $P4_2$ | $P4_1$ | | | | C3 | |
| 4 | P1 | | P2 | | | B4 | |
| 5 | P5 | | | | | A5 | |
| 6 | P1 | | P2 | | | 96 | |
| 7 | P6 | | | | | 87 | |
| 8 | P1 | | P2 | | | 78 | |
| 9 | P7 | | | | | 69 | |

FIG. 7

CAS $1_1$ (GRAPHIQUE ECRAN)

FORMAT IRIG

FORMAT1

| CC1 | CC2 | CC3 | CC4 |
|---|---|---|---|

xx xx    000000    00

| S | P1 | P2 | P3 | ID FIX | ID compt1 | P1 | P4 | P6 | P2 | P1 |
|---|---|---|---|---|---|---|---|---|---|---|

xx...xx    000000    01

| S | P1 | P2 | P3 | ID FIX | ID compt2 | P1 | P5 | P7 | P2 | P1 |
|---|---|---|---|---|---|---|---|---|---|---|

xx...xx    000000    10

| S | P1 | P2 | P3 | ID FIX | ID compt3 | P1 | P4 | P8 | P2 | P1 |
|---|---|---|---|---|---|---|---|---|---|---|

xx .xx    000000    11

| S | P1 | P2 | P3 | ID FIX | ID compt4 | P1 | P5 | P9 | P2 | P1 |
|---|---|---|---|---|---|---|---|---|---|---|

01    0

| TF1 | T1 | T2 | TF2 | T3 | T4 | T5 |
|---|---|---|---|---|---|---|

# FIG. 2 a

12

CAS 1 (TABLE MEMOIRE)

| NOM CHAMP | LONG. | TYPE CHAMP | CHAMP LIE | CHAMP PERE1 | POS1. | CONTENU |
|---|---|---|---|---|---|---|
| | | | | | | . |
| | | | | | | |
| FORMAT1 | 384 | FORMAT | | MISSION1 | 0 | |
| CC1 | 96 | | | FORMAT1 | 1 | |
| CC2 | 96 | | | FORMAT1 | 97 | |
| CC3 | 96 | | | FORMAT1 | 193 | |
| CC3 | 96 | | | FORMAT1 | 289 | |
| S | 24 | SYNCHRO | | CC1 | 1 | 'XX..X' |
| P1 | 8 | (PARAMETRE) | | CC1 | 25 | |
| P2 | 8 | (PARAMETRE) | | CC1 | 33 | |
| P3 | 8 | (PARAMETRE) | | CC1 | 41 | |
| IDFIX | 6 | (SYNCHRO) | | CC1 | 49 | '000000' |
| IDCOMPT1 | 2 | SYNCHRO | | CC1 | 55 | '00' |
| P1 | 8 | (PARAMETRE) | | CC1 | 57 | |
| P4 | 8 | (PARAMETRE) | | CC1 | 65 | |
| P6 | 8 | (PARAMETRE) | | CC1 | 73 | |
| P2 | 8 | (PARAMETRE) | | CC1 | 81 | |
| P1 | 8 | (PARAMETRE) | | CC1 | 89 | |
| S | 24 | SYNCHRO | | CC2 | 1 | 'XX..X' |
| P1 | 8 | (PARAMETRE) | | CC2 | 25 | |
| P2 | 8 | (PARAMETRE) | | CC2 | 33 | |
| P3 | 8 | (PARAMETRE) | | CC2 | 41 | |
| IDFIX | 6 | (SYNCHRO) | | CC2 | 49 | '000000' |
| IDCOMPT2 | 2 | SYNCHRO | | CC2 | 55 | '01' |
| P1 | 8 | (PARAMETRE) | | CC2 | 57 | |
| P5 | 8 | (PARAMETRE) | | CC2 | 65 | |
| P7 | 8 | (PARAMETRE) | | CC2 | 73 | |
| P2 | 8 | (PARAMETRE) | | CC2 | 81 | |
| P1 | 8 | (PARAMETRE) | | CC2 | 89 | |
| S | 24 | SYNCHRO | | CC3 | 1 | 'XX..X' |
| P1 | 8 | (PARAMETRE) | | CC3 | 25 | |
| P2 | 8 | (PARAMETRE) | | CC3 | 33 | |
| P3 | 8 | (PARAMETRE) | | CC3 | 41 | |
| IDFIX | 6 | (SYNCHRO) | | CC3 | 49 | '000000' |
| IDCOMPT3 | 2 | SYNCHRO | | CC3 | 55 | '10' |
| P1 | 8 | (PARAMETRE) | | CC3 | 57 | |
| P4 | 8 | (PARAMETRE) | | CC3 | 65 | |
| P8 | 8 | (PARAMETRE) | | CC3 | 73 | |
| P2 | 8 | (PARAMETRE) | | CC3 | 81 | |
| P1 | 8 | (PARAMETRE) | | CC3 | 89 | |
| S | 24 | SYNCHRO | | CC4 | 1 | 'XX..X' |
| P1 | 8 | (PARAMETRE) | | CC4 | 25 | |
| P2 | 8 | (PARAMETRE) | | CC4 | 33 | |
| P3 | 8 | (PARAMETRE) | | CC4 | 41 | |
| IDFIX | 6 | (SYNCHRO) | | CC4 | 49 | '000000' |
| IDCOMPT4 | 2 | SYNCHRO | | CC4 | 55 | '11' |
| P1 | 8 | (PARAMETRE) | | CC4 | 57 | |
| P5 | 8 | (PARAMETRE) | | CC4 | 65 | |
| P9 | 8 | (PARAMETRE) | | CC4 | 73 | |
| P2 | 8 | (PARAMETRE) | | CC4 | 81 | |

# FIG. 2 b

CAS 1 (TABLE MEMOIRE SUITE)

| P 1 | 8 | (PARAMETRE) | | CC4 | 8 9 | |
|------|---|-------------|---|-----|-----|------|
| TF1 | 2 | (SYNCHRO) | | P9 | 1 | '01' |
| T 1 | 1 | (TOPS) | | P9 | 3 | |
| T 2 | 1 | (TOPS) | | P9 | 4 | |
| TF2 | 1 | (SYNCHRO) | | P9 | 5 | '0' |
| T 3 | 1 | (TOPS) | | P9 | 6 | |
| T 4 | 1 | (TOPS) | | P9 | 7 | |
| T 5 | 1 | (TOPS) | | P9 | 8 | |

# FIG. 2 c

CAS $l_2$ (GRAPHIQUE ECRAN)

FORMAT 1

XX...XX          000000

| S | P1 | P2 | P3 | ID FIX | ID compt1 | P1 | P4 | P6 | P2 | P1 |
| S | P1 | P2 | P3 | ID FIX | ID compt2 | P1 | P5 | P7 | P2 | P1 |
| S | P1 | P2 | P3 | ID FIX | ID compt3 | P1 | P4 | P8 | P2 | P1 |
| S | P1 | P2 | P3 | ID FIX | ID compt4 | P1 | P5 | P9 | P2 | P1 |

01          0

| TF1 | T1 | T2 | TF2 | T3 | T4 | T5 |

# FIG. 3 a

CAS 2₂ (TABLE MEMOIRE)

| NOM CHAMP | LONG. | TYPE CHAMP | CHAMP LIE | CHAMP PERE1 | POS1. | CONTENU |
|---|---|---|---|---|---|---|
| FORMAT1 | 384 | FORMAT | | MISSION1 | 0 | |
| S | 24 | SYNCHRO | | FORMAT1 | 1 | 'XX...X' |
| P1 | 8 | (PARAMETRE) | | FORMAT1 | 25 | |
| P2 | 8 | (PARAMETRE) | | FORMAT1 | 33 | |
| P3 | 8 | (PARAMETRE) | | FORMAT1 | 41 | |
| IDFIX | 6 | (SYNCHRO) | | FORMAT1 | 49 | '000000' |
| IDCOMPT1 | 2 | SYNCHRO | | FORMAT1 | 55 | '00' |
| P1 | 8 | (PARAMETRE) | | FORMAT1 | 57 | |
| P4 | 8 | (PARAMETRE) | | FORMAT1 | 65 | |
| P6 | 8 | (PARAMETRE) | | FORMAT1 | 73 | |
| P2 | 8 | (PARAMETRE) | | FORMAT1 | 81 | |
| P1 | 8 | (PARAMETRE) | | FORMAT1 | 89 | |
| S | 24 | SYNCHRO | | FORMAT1 | 97 | 'XX...X' |
| P1 | 8 | (PARAMETRE) | | FORMAT1 | 121 | |
| P2 | 8 | (PARAMETRE) | | FORMAT1 | 129 | |
| P3 | 8 | (PARAMETRE) | | FORMAT1 | 137 | |
| IDFIX | 6 | (SYNCHRO) | | FORMAT1 | 145 | '000000' |
| IDCOMPT2 | 2 | SYNCHRO | | FORMAT1 | 151 | '01' |
| P1 | 8 | (PARAMETRE) | | FORMAT1 | 153 | |
| P5 | 8 | (PARAMETRE) | | FORMAT1 | 161 | |
| P7 | 8 | (PARAMETRE) | | FORMAT1 | 169 | |
| P2 | 8 | (PARAMETRE) | | FORMAT1 | 177 | |
| P1 | 8 | (PARAMETRE) | | FORMAT1 | 185 | |
| S | 24 | SYNCHRO | | FORMAT1 | 193 | 'XX...X' |
| P1 | 8 | (PARAMETRE) | | FORMAT1 | 217 | |
| P2 | 8 | (PARAMETRE) | | FORMAT1 | 225 | |
| P3 | 8 | (PARAMETRE) | | FORMAT1 | 233 | |
| IDFIX | 6 | (SYNCHRO) | | FORMAT1 | 241 | '000000' |
| IDCOMPT3 | 2 | SYNCHRO | | FORMAT1 | 247 | '10' |
| P1 | 8 | (PARAMETRE) | | FORMAT1 | 249 | |
| P4 | 8 | (PARAMETRE) | | FORMAT1 | 257 | |
| P8 | 8 | (PARAMETRE) | | FORMAT1 | 265 | |
| P2 | 8 | (PARAMETRE) | | FORMAT1 | 273 | |
| P1 | 8 | (PARAMETRE) | | FORMAT1 | 281 | |
| S | 24 | SYNCHRO | | FORMAT1 | 289 | 'XX...X' |
| P1 | 8 | (PARAMETRE) | | FORMAT1 | 313 | |
| P2 | 8 | (PARAMETRE) | | FORMAT1 | 321 | |
| P3 | 8 | (PARAMETRE) | | FORMAT1 | 329 | |
| IDFIX | 6 | (SYNCHRO) | | FORMAT1 | 337 | '000000' |
| IDCOMPT4 | 2 | SYNCHRO | | FORMAT1 | 343 | '11' |
| P1 | 8 | (PARAMETRE) | | FORMAT1 | 345 | |
| P5 | 8 | (PARAMETRE) | | FORMAT1 | 353 | |
| P9 | 8 | (PARAMETRE) | | FORMAT1 | 361 | |
| P2 | 8 | (PARAMETRE) | | FORMAT1 | 369 | |
| P1 | 8 | (PARAMETRE) | | FORMAT1 | 377 | |
| TF1 | 2 | (SYNCHRO) | | P9 | 1 | '01' |
| T1 | 1 | (TOPS) | | P9 | 3 | |
| T2 | 1 | (TOPS) | | P9 | 4 | |

# FIG. 3 b

CAS 1$_2$ (TABLE MEMOIRE SUITE)

| TF2 | 1 | (SYNCHRO) | | P9 | 5 | '0' |
|---|---|---|---|---|---|---|
| T3 | 1 | (TOPS) | | P9 | 6 | |
| T4 | 1 | (TOPS) | | P9 | 7 | |
| T5 | 1 | (TOPS) | | P9 | 8 | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |

# FIG. 3 c

CAS 1₃ (GRAPHIQUE ECRAN)

FIG. 4 a

CAS 1₃ (TABLE MEMOIRE)

| NOM CHAMP | LONG. | TYPE CHAMP | CHAMP LIE | CHAMP PERE1 | POS1. | CONTENU |
|---|---|---|---|---|---|---|
| | | | | | | |
| | | | | | | |
| FORMAT1 | 96 | FORMAT | | MISSION1 | 0 | |
| S | 24 | SYNCHRO | | FORMAT1 | 1 | 'XX..X' |
| P1 | 8 | (PARAMETRE) | | FORMAT1 | 25 | |
| P2 | 8 | (PARAMETRE) | | FORMAT1 | 33 | |
| P3 | 8 | (PARAMETRE) | | FORMAT1 | 41 | |
| IDFIX | 6 | (SYNCHRO) | | FORMAT1 | 49 | '000000' |
| idcomptpère | 2 | | | FORMAT1 | 55 | |
| P1 | 8 | (PARAMETRE) | | FORMAT1 | 57 | |
| P4P5père | 8 | | | FORMAT1 | 65 | |
| P6-P9père | 8 | | | FORMAT1 | 73 | |
| P4P5 | 32 | | | P4P5père | 0 | |
| P6-P9 | 32 | | | P6-P9père | 0 | |
| P2 | 8 | (PARAMETRE) | | FORMAT1 | 81 | |
| P1 | 8 | (PARAMETRE) | | FORMAT1 | 89 | |
| P4 | 8 | (PARAMETRE) | IDcompt1 | P4P5 | 1 | |
| P5 | 8 | (PARAMETRE) | IDcompt2 | P4P5 | 9 | |
| P4 | 8 | (PARAMETRE) | IDcompt3 | P4P5 | 17 | |
| P5 | 8 | (PARAMETRE) | IDcompt4 | P4P5 | 25 | |
| P6 | 8 | (PARAMETRE) | IDcompt1 | P6-P9 | 1 | |
| P7 | 8 | (PARAMETRE) | IDcompt2 | P6-P9 | 9 | |
| P8 | 8 | (PARAMETRE) | IDcompt3 | P6-P9 | 17 | |
| P9 | 8 | | IDcompt4 | P6-P9 | 25 | |
| TFIXE1 | 2 | (SYNCHRO) | | P9 | 1 | '01' |
| T1 | 1 | (TOPS) | | P9 | 3 | |
| T2 | 1 | (TOPS) | | P9 | 4 | |
| TFIXE2 | 1 | (SYNCHRO) | | P9 | 5 | '0' |
| T3 | 1 | (TOPS) | | P9 | 6 | |
| T4 | 1 | (TOPS) | | P9 | 7 | |
| T5 | 1 | (TOPS) | | P9 | 8 | |
| IDCOMPT1 | 2 | SYNCHRO | | IDCOMPT | 1 | '00' |
| IDCOMPT2 | 2 | SYNCHRO | | IDCOMPT | 3 | '01' |
| IDCOMPT3 | 2 | SYNCHRO | | IDCOMPT | 5 | '10' |
| IDCOMPT4 | 2 | SYNCHRO | | IDCOMPT | 7 | '11' |
| IDCOMPT 5 | 8 | ( SYNCHRO ) | | IDCOMPT PERE | O | 00011011 |
| | | | | | | |

FIG. 4 b

## CAS 2 (GRAPHIQUE ECRAN)

## NORME CCSDS

FIG. 6 a

CAS 2 (TABLE MEMOIRE)

| NOM CHAMP | LONG. | TYPE CHAMP | CHAMP LIE | CHAMP PERE | POS. | CONTENU |
|---|---|---|---|---|---|---|
| | | | | | | |
| | | | | | | |
| PACKET | 0 | | PAK.LENGHT | MPDU PAK.SOME | 0 | |
| PACKETID | 16 | SYNC | | PACKET | 1 | 'X..X' |
| VERSION | 3 | SYNC | | PACKETID | 1 | 'X..X' |
| TYP | 1 | SYNC | | PACKETID | 4 | 'X..X' |
| SEC.HDR.FLAG | 1 | SYNC | | PACKETID | 5 | 'X' |
| APP.PROC.ID | 11 | SYNC | | PACKETID | 6 | 'X..X' |
| PAK.SEQ.CTL | 16 | | | PACKET | 7 | |
| SEQU.FLAG | 2 | SYNC | | PAK.SEQ.CTL | 1 | 'XX' |
| PAK.SEQ.COUNT | 14 | CCSDS P.COUNT | | PAK.SEQ.CTL | 3 | |
| PAK.LENGHT ' | 16 | LONGUEUR | | PACKET | 33 | |
| USERDATA | 0 | | | PACKET | 49 | |
| | | | | | | |
| MPDU | Lmdpu | | | VCDU DATA | 0 | |
| MPDU HEADER | 16 | SYNC | | MPDU | 1 | 'X..X' |
| SPARE MPDU | 5 | | | MPDU HEADER | 1 | |
| FIRST HDR PTR | 11 | | | MPDU HEADER | 6 | |
| MPDU PAK.SOME | 0 | | | MPDU | 17 | |
| | | | | | | |
| BPDU | Lbpdu | | | VCDU DATA | 0 | |
| BPDU HEADER | 16 | SYNC | | BPDU | 1 | 'X..X' |
| SPARE BPDU | 2 | | | BPDU HEADER | 1 | |
| BITST.DT.PTR | 14 | | | BPDU HEADER | 3 | |
| DATA ZONE | 0 | | | BPDU | 17 | |
| | | | | | | |
| VCDU | Lvcdu | | COD. R-S | CODEDVCDU | 1 | |
| VCDU HEADER | 64 | SYNC | | VCDU | 1 | 'X..X' |
| VCDU DATA | X | | | VCDU | 65 | |
| VCDU TRAILER | 48 | | | VCDU | -48 | |
| | | | | | | |
| CODEDVCDU | Lcvcdu | | | CADU | Lsync+1 | |
| COD. R-S | Lcvrs | R-S 255/233 | | CODEDVCDU | -Lcvrs | |
| | | | | | | |
| CADU | | | | PCAPDU | 0 | |
| SYNC. MARKER | Lsync | SYNC | | CADU | 1 | 'X..X' |
| | | | | | | |
| PCAPDU | 0 | | | MISSION1 | 0 | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |
| | | | | | | |

FIG. 6 b

CAS 3 (GRAPHIQUE ECRAN)

(MESSAGE CALCULATEUR ARIANE)

FIG. 8 a

CAS 3 (TABLE MEMOIRE)

| NOM CHAMP | LONG. | TYPE CHAMP | CODAGE | CHAMP LIE | CHAMP PERE | POS. | CONTENU |
|---|---|---|---|---|---|---|---|
| | | | | | | | |
| | | | | | | | |
| YC002 | 90 | | | | YC002père | 0 | |
| YC003 | 18 | | | | YC003père | 0 | |
| YC004 | 45 | | | | YC004père | 0 | |
| YC005 | 9 | | | | YC005père | 0 | |
| YC012 | 90 | SYNCHRO5/5,2 | | | YCO12père | 0 | |
| P1 | 8 | | | YC012F0 | YC002 | 1 | |
| P32 | 8 | | | YC012E1 | YC002 | 10 | |
| P1 | 8 | | | YC012D2 | YC002 | 19 | |
| P42 | 8 | | | YC012C3 | YC002 | 28 | |
| P1 | 8 | | | YC012B4 | YC002 | 37 | |
| P5 | 8 | | | YC012A5 | YC002 | 46 | |
| P1 | 8 | | | YC01296 | YC002 | 55 | |
| P6 | 8 | | | YC01287 | YC002 | 64 | |
| P1 | 8 | | | YC01278 | YC002 | 73 | |
| P7 | 8 | CHECKSUMXX | | YC01269 | YC002 | 82 | |
| P31 | 8 | | | YC012E1 | YC003 | 1 | |
| P41 | 8 | | | YC012C3 | YC003 | 10 | |
| P2 | 8 | | | YC012F0 | YC004 | 1 | |
| P2 | 8 | | | YC012D2 | YC004 | 10 | |
| P2 | 8 | | | YC012B4 | YC004 | 19 | |
| P2 | 8 | | | YC01296 | YC004 | 28 | |
| P2 | 8 | | | YC01278 | YC004 | 37 | |
| P33 | 8 | | | YC012E1 | YC005 | 1 | |
| YC012F0 | 8 | | | | YC012 | 1 | F0 |
| YC012E1 | 8 | | | | YC012 | 10 | E1 |
| YC012D2 | 8 | | | | YC012 | 19 | D2 |
| YC012C3 | 8 | | | | YC012 | 28 | C3 |
| YC012B4 | 8 | | | | YC012 | 37 | B4 |
| YC012A5 | 8 | | | | YC012 | 46 | A5 |
| YC01296 | 8 | | | | YC012 | 55 | 96 |
| YC01287 | 8 | | | | YC012 | 64 | 87 |
| YC01278 | 8 | | | | YC012 | 73 | 78 |
| YC01269 | 8 | | | | YC012 | 82 | 69 |
| P3 | 24 | | | | FP | | |
| P31 | 8 | | | | P3 | 1 | |
| P32 | 8 | | | | P3 | 9 | |
| P33 | 8 | | | | P3 | 17 | |
| P4 | 8 | | | | FP | | |
| P41 | 8 | | | | P4 | 1 | |
| P42 | 8 | | | | P4 | 9 | |
| CHAMPCHECK | ? | | | P7 | FP (?) | | |
| MESSAGCAL | 45 | | | | ? | | |
| YC002PERE | 9 | PLUSPP | | | MESSAGCAL | 1 | |
| YC003PERE | 9 | PLUSPP | | | MESSAGCAL | 10 | |
| YC004PERE | 9 | PLUSPP | | | MESSAGCAL | 19 | |
| YC005PERE | 9 | PLUSPP | | | MESSAGCAL | 28 | |
| YCO12PERE | 9 | PLUSPP | | | MESSAGCAL | 37 | |
| | | | | | | | |

# FIG. 8 b

EP 0 516 531 A1

Traitement standard

Ligne I$_A$

| sens |
| adresse | fonction | synchro | ?° donnée "aller" | ?$^{15}$ |

Ligne I$_R$

Echo
| ?° | donnée "retour" | ?$^{15}$ |

bit non transmis

Mots

| D1 | D2 | D3 | D4 | D5 | D6 |

Absence de la donnée retour

Mots

| idem standard | idem standard | idem standard | idem standard | 1 ←→ 1 | 1 ←→ 1 |

Echange répété ou interdit

Mots

| 1 ←→ 1 | 1 ←→ 1 | 1 ←→ 1 | 1 ←→ 1 | 1 ←→ 1 | 1 ←→ 1 |

Saturation de l'UBUS

Mots

| 0 ←→ 0 | 0 ←→ 0 | 0 ←→ 0 | 0 ←→ 0 | 0 ←→ 0 | 0 ←→ 0 |

FIG. 9

Traitements effectués par l'UBUS
sur le dialogue fonctionnel

CAS 4 (GRAPHIQUE ECRAN)

(INFORMATIONS FONCTIONNELLES IRIG)

FIG. 10

CAS 4 (TABLE MEMOIRE)

| NOM CHAMP | LONG. | TYPE CHAMP | CODAGE | CHAMP LIE | CHAMP PERE | POS. | CONTENU |
|---|---|---|---|---|---|---|---|
| | | | | | | | |
| | | | | | | | |
| D1 | 9 | PLUSPP | | | IRIG | ? | |
| D2 | 9 | PLUSPP | | | IRIG | ? | |
| D3 | 9 | PLUSPP | | | IRIG | ? | |
| D4 | 9 | PLUSPP | | | IRIG | ? | |
| D5 | 9 | PLUSPP | | | IRIG | ? | |
| D6 | 9 | PLUSPP | | | IRIG | ? | |
| ECHANGEFONC | 48 | | | | FP | | |
| D1 | 8 | | | | ECHANGFONC | 1 | |
| D2 | 8 | | | | ECHANGFONC | 9 | |
| D3 | 8 | | | | ECHANGFONC | 17 | |
| D4 | 8 | | | | ECHANGFONC | 25 | |
| D5 | 8 | | | | ECHANGFONC | 33 | |
| D6 | 8 | | | | ECHANGFONC | 41 | |
| IA | 32 | | | | ECHANGFONC | 1 | |
| AD | 5 | PARAMETRE | | | IA | 1 | |
| FCT | 4 | PARAMETRE | | | IA | 6 | |
| SENS | 1 | PARAMETRE | | | IA | 10 | |
| SY | 6 | PARAMETRE | | | IA | 11 | |
| DA | 16 | PARAMETRE | | | IA | 17 | |
| IR | 16 | | | | ECHANGFONC | 33 | |
| écho | 1 | PARAMETRE | | | IR | 1 | |
| DR | 15 | PARAMETRE | | | IR | 2 | |
| ECHANGEREP | 48 | | | | ECHANGFONC | 1 | '1...1' |
| UBUSSAT | 48 | | | | ECHANGFONC | 1 | '0...0' |
| sansretour | 16 | | | | IR | 1 | '1...1' |

FIG. 11

Office européen
des brevets

**RAPPORT DE RECHERCHE EUROPEENNE**

Numero de la demande

EP    92 40 1442

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | JOURNAL OF THE INSTITUTION OF ELECTRONIC AND RADIO ENGINEERS. vol. 57, no. S5, Septembre 1987, LONDON GB pages 123 - 131; L.S.A.MANSI ET AL: 'The UoSAT-2 spacecraft telemetry and telecommand subsystems' * le document en entier * | 1 | G06F15/40 |
| A | NACHRICHTEN TECHNIK ELEKTRONIK. vol. 31, no. 12, 1981, BERLIN DD pages 497 - 50D; K.H.SCMELOVSKY ET AL: 'Datenorganisation von Bord-Telemetriesystemen' * le document en entier * | 1 | |
| A | IBM TECHNICAL DISCLOSURE BULLETIN. vol. 25, no. 11B, Avril 1983, NEW YORK US pages 5886 - 5888; R.A.CRUS ET AL: 'METHOD FOR DELETING RECORDS FROM A HIERARCHICAL DATA BASE' * le document en entier * | 1 | |
| | | | **DOMAINES TECHNIQUES RECHERCHES (Int. Cl.5 )** |
| A | IBM TECHNICAL DISCLOSURE BULLETIN. vol. 27, no. 12, Mai 1985, NEW YORK US page 7066; 'UPDATING ATTRIBUTES OR DATA OF PARENT VIA CHANGES TO THE CHILD' * le document en entier * | 1 | G08C G06F |

Le présent rapport a été établi pour toutes les revendications

| Lieu de la recherche | Date d'achèvement de la recherche | Examinateur |
|---|---|---|
| LA HAYE | 06 AOUT 1992 | WANZEELE R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

EPO FORM 1503 03.82 (P0402)